# FASCICULE DE BREVET EUROPEEN

(11) **EP 1 759 106 B1**
(45) Date de publication et mention de la délivrance du brevet: **01.04.2009**
(21) Numéro de dépôt: 05778080.1
(22) Date de dépôt: 21.06.2005
(51) Int. Cl.: F02D 41/02, F02D 41/14

(54) **SYSTÈME D'AIDE À LA RÉGÉNÉRATION DE MOYENS DE DÉPOLLUTION INTÉGRÉS DANS UNE LIGNE D'ÉCHAPPEMENT**
SYSTEM ZUR UNTERSTÜTZUNG DER REGENERIERUNG VON ENTGIFTUNGSMITTELN IN EINER ABGASLEITUNG
SYSTEM FOR ASSISTING REGENERATION OF POLLUTION MANAGEMENT MEANS IN AN EXHAUST LINE

(30) Priorité: 23.06.2004 FR 0406860
(43) Date de publication de la demande: 07.03.2007
(73) Titulaire: PEUGEOT CITROËN AUTOMOBILES S.A., 78140 Vélizy Villacoublay (FR)
(72) Inventeur: COLIGNON, Christophe, F-92300 LEVALLOIS PERRET (FR)
(74) Mandataire: Pinchon, Odile
(86) Numéro de dépôt international: PCT/FR2005/050470
(87) Numéro de publication internationale: WO 2006/005870

(56) Documents cités:
- EP-A- 1 041 262
- EP-A- 1 405 999
- EP-B- 0 708 809
- FR-A- 2 774 421
- FR-A- 2 802 572
- BUNTING A: "SPRINGING THE TRAP" mai 2000 (2000-05), AUTOMOTIVE ENGINEER, MECHANICAL ENGINEERING PUBL.LTD. BURY ST.EDMUNDS, GB, PAGE(S) 73-74 , XP000936087 ISSN: 0307-6490 le document en entier

## Description

La présente invention concerne un système d'aide à la régénération de moyens de dépollution associés à des moyens formant catalyseur d'oxydation mettant en oeuvre une fonction OSC constituant une réserve d'oxygène, intégrés dans une ligne d'échappement d'un moteur Diesel de véhicule automobile.

Plus particulièrement, l'invention se rapporte à un tel système dans lequel le moteur est associé à des moyens à rampe commune d'alimentation en carburant de cylindres de celui-ci.

Pour assurer la régénération de moyens de dépollution tels qu'un filtre à particules, les suies piégées dans celui-ci sont brûlées grâce à la thermique fournie par le moteur et à l'exotherme réalisé par la conversion des HC et du CO sur les moyens formant catalyseur d'oxydation placés en amont du filtre à particules.

Cette combustion peut être assistée par un élément catalyseur mélangé aux suies, issu par exemple d'un additif d'aide à la régénération, mélangé au carburant d'alimentation du moteur ou bien par un catalyseur déposé directement sur les parois du filtre à particules (filtre à particules catalysé).

Plus les niveaux thermiques dans la ligne d'échappement en entrée du filtre à particules sont élevés, plus la durée de régénération du filtre est courte.

On connaît par le document EP-A-1 041 262 un système d'aide à la régénérations de moyens de dépollution associés à un catalyseur d'oxydation intégrés dans la liane d'échappement d'un moteur de véhicule automobile, dans lequel le moteur est associé à une rampe commune d'alimentation en carburant des cylindres de celui-ci, des moyens étant prévus pour piloter le moteur dans un mode de fonctionnement de régénération mettant en oeuvre des séquences de fonctionnement du moteur alternant des phases de fonctionnement à mélange riche et à mélange pauvre. Toutefois, dans ce document, il n'est pas recherché si les régénérations sont complètes.

Or, en conditions de roulage critiques, comme par exemple en ville ou dans des embouteillages, les niveaux thermiques atteints à travers les stratégies d'aide à la régénération classiques du filtre à particules, peuvent se révéler insuffisantes pour assurer la régénération correcte du filtre, ce qui peut se traduire par des régénérations très longues et donc très consommatrices de carburant voire incomplètes.

Toute stratégie d'élévation des niveaux thermiques lors de ces roulages critiques, permet alors d'assurer des régénérations complètes, de réduire la surconsommation due à cette régénération du filtre à particules et surtout d'augmenter la marge de sécurité par rapport à la fissuration ou à la casse de ce filtre.

Le but de l'invention est de proposer une telle stratégie.

A cet effet, l'invention a pour objet un système d'aide à la régénération de moyens de dépollution associés à des moyens formant catalyseur d'oxydation mettant en oeuvre une fonction OSC (**Oxygen Storage Capacity),** constituant une réserve d'oxygène et intégrés dans une ligne d'échappement d'un moteur Diesel de véhicule automobile,
dans lequel le moteur est associé à des moyens à rampe commune d'alimentation en carburant des cylindres de celui-ci, des moyens étant prévus pour piloter le moteur dans un mode de fonctionnement de régénération mettant en oeuvre des séquences de fonctionnement du moteur alternant des phases de fonctionnement à mélange riche et à mélange pauvre, caractérisé en ce qu'il comporte des moyens de détermination du nombre de régénérations incomplètes des moyens de dépollution et de comparaison de celui-ci à des valeurs de seuil prédéterminées, pour piloter le moteur dans un premier mode de fonctionnement de régénération à mélange pauvre pour un nombre inférieur aux valeurs de seuil ou dans un second mode de fonctionnement de régénération mettant en oeuvre des séquences de fonctionnement du moteur alternant des phases de fonctionnement à mélange riche et à mélange pauvre pour un nombre supérieur aux valeurs de seuil.

Suivant d'autres caractéristiques :
- les moyens de dépollution comprennent un filtre à particules ;
- le filtre à particules est catalysé ;
- les moyens de dépollution comprennent un piège à NOx ;
- le carburant comporte un additif destiné à se déposer avec les particules auxquelles il est mélangé, sur les moyens de dépollution pour faciliter leur régénération ;
- le carburant comporte un additif formant piège à NOx ;
- les moyens de dépollution sont imprégnés avec une formulation SCR, assurant une fonction d'oxydation CO/HC ;
- le moteur est associé à un turbocompresseur.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système d'aide selon l'invention ; et
- la Fig.2 illustre le fonctionnement de celui-ci.

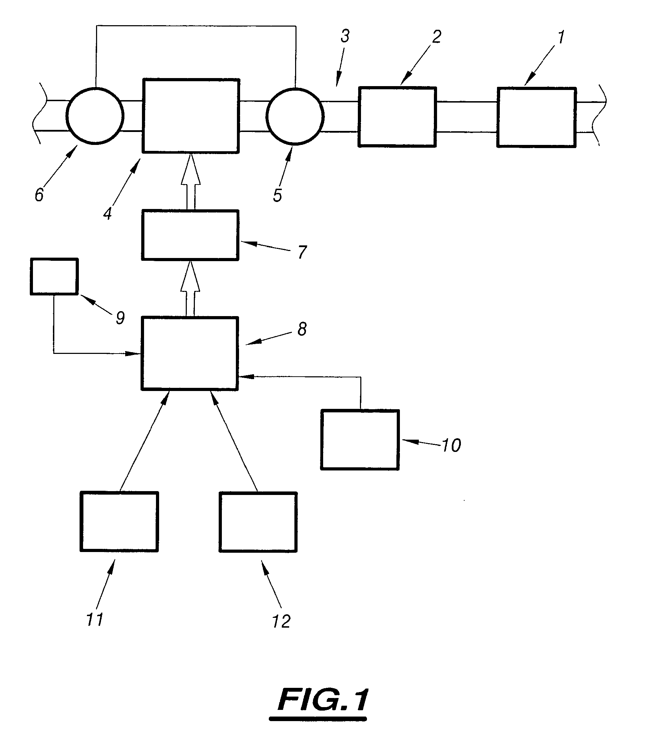

On a en effet illustré sur la figure 1, un système d'aide à la régénération de moyens de dépollution désignés par la référence générale 1, associés à des moyens formant catalyseur d'oxydation, mettant en oeuvre une fonction OSC constituant une réserve d'oxygène, désignés par la référence générale 2, et placés dans une ligne d'échappement 3 d'un moteur de véhicule automobile.

Ce moteur est désigné par la référence générale 4 et peut être associé par exemple à un turbocompresseur dont la portion de turbine 5 est associée à la ligne d'échappement et dont la portion de compresseur 6 est placée en amont du moteur.

De tels moyens formant catalyseur d'oxydation mettant en oeuvre une fonction OSC sont déjà connus dans l'état de la technique.

Le moteur est associé à des moyens à rampe commune d'alimentation en carburant des cylindres de celui-ci désignés par la référence générale 7, dont le fonctionnement est contrôlé par un superviseur 8.

Selon l'invention, ce système comporte également des moyens de détermination du nombre de régénérations incomplètes des moyens de dépollution et des moyens de comparaison de celui-ci à des valeurs de seuil prédéterminées pour contrôler le fonctionnement du moteur.

Ces moyens formés par exemple par le superviseur 8, sont alors reliés à des moyens de détermination de ce nombre, désignés par la référence générale 9, délivrant celui-ci au superviseur 8, de manière à permettre à celui-ci de le comparer à des valeurs de seuil telles que délivrées par des moyens de génération 10 comprenant tous moyens appropriés permettant d'établir ces valeurs de seuil.

La détermination du nombre de régénérations incomplètes des moyens de dépollution est en effet importante.

En effet, lorsque les moyens de dépollution tels qu'un filtre à particules viennent de subir plusieurs régénérations incomplètes, que celles-ci soient partielles ou échouées, consécutives, le superviseur des moyens de dépollution estime mal la quantité de suies qui est présente dans le filtre.

En effet, il y a d'une part, une non-corrélation entre la masse de particules présente dans le filtre et les pertes de charge mesurées aux bornes du filtre à particules (ou la contre-pression mesurée en entrée du filtre) et d'autre part, une hétérogénéité spatiale de la distribution des suies dans le filtre, la périphérie du support filtrant étant souvent plus chargée que le centre.

Il est donc alors nécessaire de pouvoir assurer une régénération complète afin de réinitialiser la charge du filtre à particules avec le plus de confiance possible.

La détermination d'une régénération incomplète peut être réalisée de n'importe quelle manière appropriée déjà connue de l'état de la technique, en utilisant par exemple des moyens de cartographie, le temps passé au-dessus d'une certaine température de la ligne d'échappement, un calcul de température moyenne en entrée des moyens de dépollution lors de la tentative de régénération, un modèle mathématique de décrémentation de la masse de suies piégée dans les moyens de dépollution, dans lequel la vitesse de combustion des suies est fonction de la température des gaz, etc..

Ce nombre ainsi déterminé est ensuite comparé à des valeurs de seuil pour déterminer la stratégie optimale à appliquer.

En fonction du résultat de cette comparaison, le superviseur et les moyens à rampe commune d'alimentation en carburant sont adaptés pour piloter le moteur dans un premier mode de fonctionnement de régénération à mélange pauvre pour un nombre inférieur aux valeurs de seuil, ou dans un second mode de fonctionnement de régénération mettant en oeuvre des séquences de fonctionnement du moteur alternant des phases de fonctionnement à mélange riche et à mélange pauvre, pour un nombre supérieur aux valeurs de seuil. Ces phases de fonctionnement à mélange riche ou pauvre sont établies de façon classique en modifiant des paramètres de contrôle du fonctionnement du moteur.

Ces stratégies sont désignées respectivement par les références générales 11 et 12 sur cette figure.

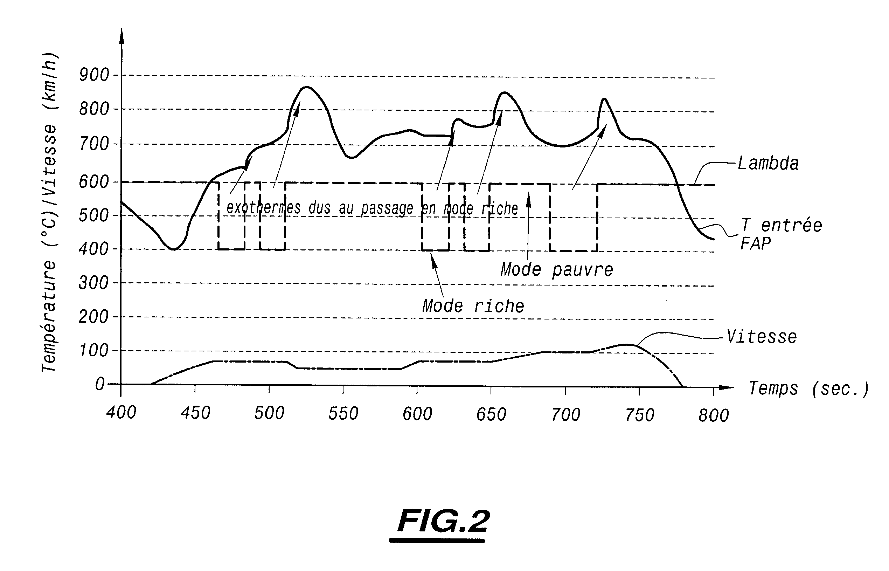

Ceci est illustré sur la figure 2, sur laquelle on voit clairement apparaître les exothermes liés au passage en mode de fonctionnement riche du moteur.

En mode riche, le moteur Diesel émet une grande quantité de CO et d'hydrocarbures imbrûlés dans les gaz d'échappement.

Par ailleurs, la quantité d'oxygène présente dans les gaz est fortement réduite (inférieure à 2-3% et parfois à moins de 1%). Le passage de ces gaz dans les moyens formant catalyseur d'oxydation permet la combustion du CO et des HC par l'oxygène présent dans les gaz.

Afin de pouvoir convertir une plus grosse quantité de CO et des HC, il est souhaitable de mettre à disposition une plus grande quantité d'oxygène.

A cet effet, la présence du composant de type OSC constituant une réserve d'oxygène (Oxygen Storage Capacity), tel que par exemple du cérium qui stocke l'oxygène sous forme de cérine - CeO₂ - ou un oxyde mixte de cérium et de zirconium dans les moyens formant catalyseur d'oxydation, permet de libérer de l'oxygène lors des passages du moteur en mode riche.

La combustion du CO et des HC est une réaction exothermique et permet d'augmenter les niveaux thermiques en sortie des moyens formant catalyseur d'oxydation, c'est-à-dire en fait en entrée du filtre à particules.

En mode de fonctionnement pauvre du moteur (mode RG FAP), on a beaucoup moins de réducteurs (CO, HC) qu'en mode de fonctionnement riche, mais malgré une teneur en oxygène moins élevée, compensée en partie par la présence du composant OSC, l'exotherme produit par les moyens formant catalyseur d'oxydation est plus important en mode riche qu'en mode de régénération pauvre du filtre à particules.

Le passage en mode de fonctionnement riche permet donc de chauffer davantage les gaz d'échappement, ce qui accélère la vitesse de régénération du filtre à particules.

Dans le cas d'un filtre à particules utilisant un additif d'aide à la régénération, l'augmentation des niveaux thermiques permet de réduire le dosage en additif et ainsi d'augmenter la distance parcourue par le véhicule avant le nettoyage du filtre.

On sait en effet qu'un tel additif peut être mélangé au carburant d'alimentation du moteur pour se déposer sur le filtre à particules avec les particules auxquelles il est mélangé, afin d'abaisser la température de combustion des suies piégées dans celui-ci.

De façon classique, cet additif est en effet présent dans les particules après combustion du carburant additivé dans le moteur.

Bien entendu, différents modes de réalisation peuvent être envisagés.

C'est ainsi par exemple que les moyens de dépollution peuvent comporter un filtre à particules, catalysé ou non, un piège à NOx, etc..

Ces moyens de dépollution peuvent également être imprégnés avec une formulation SCR assurant une fonction d'oxydation CO/HC de façon classique.

Par ailleurs, les moyens de dépollution et les moyens formant catalyseur d'oxydation peuvent être intégrés dans un seul et même élément, notamment sur le même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non.

Cette fonction d'oxydation et/ou de piège à NOx peut être remplie par exemple par un additif mélangé au carburant.

On conçoit alors comme cela est illustré sur la figure 2, que le pilotage du moteur permet d'augmenter les niveaux thermiques par rapport à un fonctionnement standard, notamment pour les états de charge critiques, ce qui permet ainsi une régénération plus rapide et complète du filtre.

## Revendications

1. Système d'aide à la régénération de moyens de dépollution (1) associés à des moyens formant catalyseur d'oxydation (2) mettant en oeuvre une fonction OSC c'est-à-dire Oxygen Storage Capacity constituant une réserve d'oxygène et intégrés dans une ligne d'échappement (3) d'un moteur Diesel (4) de véhicule automobile, dans lequel le moteur est associé à des moyens (7) à rampe commune d'alimentation en carburant des cylindres de celui-ci, des moyens étant prévus pour piloter le moteur dans un mode de fonctionnement de régénération méttant en oeuvre des séquences de fonctionnement du moteur alternant des phases de fonctionnement à mélange riche et à mélange pauvre, **caractérisé en ce qu'**il comporte des moyens (8, 9) de détermination du nombre de régénérations incomplètes des moyens de dépollution et de comparaison de celui-ci à des valeurs de seuil prédéterminées (10), pour piloter le moteur (4) dans un premier mode de fonctionnement de régénération à mélange pauvre (11) pour un nombre inférieur aux valeurs de seuil ou dans un second mode de fonctionnement de régénération mettant en oeuvre des séquences de fonctionnement du moteur alternant des phases de fonctionnement à mélange riche et à mélange pauvre (12) pour un nombre supérieur aux valeurs de seuil.

2. Système selon la revendication 1, **caractérisé en ce que** les moyens de dépollution comprennent un filtre à particules (1).

3. Système selon la revendication 2, **caractérisé en ce que** le filtre à particules est catalysé.

4. Système selon l'une quelconque des revendications précédentes, **caractérisé en ce que** les moyens de dépollution comprennent un piège à NOx.

5. Système selon l'une quelconque des revendications précédentes, **caractérisé en ce que** le carburant comporte un additif destiné à se déposer avec les particules auxquelles il est mélangé, sur les moyens de dépollution pour faciliter leur régénération.

6. Système selon l'une quelconque des revendications précédentes, **caractérisé en ce que** le carburant comporte un additif formant piège à NOx ;

7. Système selon l'une quelconque des revendications précédentes, **caractérisé en ce que** les moyens de dépollution (1) sont imprégnés avec une formulation SCR, assurant une fonction d'oxydation CO/HC.

8. Système selon l'une quelconque des revendications précédentes, **caractérisé en ce que** le moteur (4) est associé à un turbocompresseur (5,6).

## Claims

1. System for aiding the regeneration of pollution control means (1) associated with oxidation catalyst forming means (2) using an OSC (oxygen storage capacity) function and built into an exhaust line (3) of a diesel engine (4) of a motor vehicle, in which the engine is associated with common rail injection means (7) for feeding fuel to the cylinders thereof, means being provided for operating the engine in a regeneration operating mode using engine operating sequences that alternate operating phases with a rich mixture and with a lean mixture, **characterized in that** it comprises means (8, 9) for determining the number of incomplete regenerations of the pollution control means and for comparing the said number to predefined threshold values (10), in order to operate the engine (4) in a first regeneration operating mode with a lean mixture (11) for a number smaller than the threshold values, or in a second regeneration operating mode using engine operating sequences that alternate operating phases with a rich mixture and with a lean mixture (12) for a number larger than the threshold values.

2. System according to Claim 1, **characterized in that** the pollution control means comprise a particulate filter (1) .

3. System according to Claim 2, **characterized in that** the particulate filter is catalysed.

4. System according to any one of the preceding claims, **characterized in that** the pollution control means comprise a NOx trap.

5. System according to any one of the preceding claims, **characterized in that** the fuel comprises an additive to be deposited with the particulates with which it is mixed, on the pollution control means, to facilitate their regeneration.

6. System according to any one of the preceding claims, **characterized in that** the fuel comprises a NOx trap forming additive.

7. System according to any one of the preceding claims, **characterized in that** the pollution control means (1) are impregnated with a SCR formulation, providing a CO/HC oxidation function.

8. System according to any one of the preceding claims, **characterized in that** the engine (4) is associated with a turbocharger (5, 6).

## Patentansprüche

1. Hilfssystem für das Regenerieren von Reinigungsmitteln (1), die mit Mitteln verbunden sind, die einen Oxidationskatalysator (2) bilden, der eine OSC-Funktion, d. h. Oxygen Storage Capacity (Sauerstoffspeicherfähigkeit), umsetzt, die eine Sauerstoffreserve bildet, und die in eine Auspufflinie (3) eines Dieselmotors (4) eines Kraftfahrzeugs eingebaut sind, bei dem der Motor mit Mitteln (7) mit gemeinsamer Kraftstoffversorgungsrampe der Zylinder des Motors verbunden ist, wobei diese Mittel zur Steuerung des Motors in einer Regenerierungsbetriebsart vorgesehen sind, die Betriebssequenzen des Motors umsetzt, die Betriebsphasen mit reichhaltigem Gemisch und mit armem Gemisch abwechseln, **dadurch gekennzeichnet, dass** es Mittel (8, 9) zum Bestimmen der Anzahl unvollständiger Regenerierungen der Reinigungsmittel und Vergleichen dieser Anzahl mit vorbestimmten Schwellenwerten (10) aufweist, um den Motor (4) in einer ersten Regenerierungsbetriebsart mit armem Gemisch (11) für eine Anzahl zu steuern, die unter den Schwellenwerten liegt, oder in einer zweiten Regenerierungsbetriebsart, die Betriebssequenzen des Motors umsetzt, die Betriebsphasen mit reichhaltigem Gemisch und mit armem Gemisch (12) für eine Anzahl abwechseln, die größer ist als die Schwellenwerte.

2. System nach Anspruch 1, **dadurch gekennzeichnet, dass** die Reinigungsmittel ein Partikelfilter (1) aufweisen.

3. System nach Anspruch 2, **dadurch gekennzeichnet, dass** das Partikelfilter katalysiert ist.

4. System nach einem der vorhergehenden Ansprüche, **dadurch gekennzeichnet, dass** die Reinigungsmittel eine NOx-Falle aufweisen.

5. System nach einem der vorhergehenden Ansprüche, **dadurch gekennzeichnet, dass** der Kraftstoff ein Zusatzmittel aufweist, das dazu bestimmt ist, sich mit den Partikeln, mit welchen es gemischt ist, auf den Reinigungsmitteln abzulagern, um ihr Reinigen zu erleichtern.

6. System nach einem der vorhergehenden Ansprüche, **dadurch gekennzeichnet, dass** der Kraftstoff ein Zusatzmittel aufweist, das eine NOx-Falle bildet.

7. System nach einem der vorhergehenden Ansprüche, **dadurch gekennzeichnet, dass** die Reinigungsmittel (1) mit einer SCR-Formulierung imprägniert sind, die eine CO/HC-Oxidationswirkung sicherstellt.

8. System nach einem der vorhergehenden Ansprüche, **dadurch gekennzeichnet, dass** der Motor (4) mit einem Turboverdichter (5, 6) verbunden ist.
